(19) **Europäisches Patentamt**
**European Patent Office**
**Office européen des brevets**

(11) **EP 2 600 734 B1**

(12) **EUROPEAN PATENT SPECIFICATION**

(45) Date of publication and mention of the grant of the patent:
**20.12.2017 Bulletin 2017/51**

(51) Int Cl.:
*A23G 3/54* *(2006.01)*    *A23L 29/231* *(2016.01)*
*A23L 29/281* *(2016.01)*    *A23G 3/34* *(2006.01)*

(21) Application number: **11741209.8**

(22) Date of filing: **04.08.2011**

(86) International application number:
**PCT/EP2011/063486**

(87) International publication number:
**WO 2012/017054 (09.02.2012 Gazette 2012/06)**

(54) **METHOD OF OBTAINING GUMDROPS WITH FLUID FILLING**

VERFAHREN ZUR HERSTELLUNG VON GUMMIBONBONS MIT FLÜSSIGER FÜLLUNG

MÉTHODE DE FABRICATION DE BOULES DE GOMME DOTÉES D'UNE GARNITURE FLUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.08.2010 IT MI20101507**

(43) Date of publication of application:
**12.06.2013 Bulletin 2013/24**

(73) Proprietor: **Perfetti Van Melle S.p.A.**
**20020 Lainate (Milano) (IT)**

(72) Inventors:
• **ZANNI, Massimiliano**
**I-20020 Lainate (MI) (IT)**
• **BRUIN, Pieter Jacob**
**I-20020 Lainate (MI) (IT)**
• **COLLE, Roberto**
**I-20020 Lainate (MI) (IT)**

• **HENDRIKX, Henri**
**I-20020 Lainate (MI) (IT)**
• **RUGGERI, Alessandro**
**I-20020 Lainate (MI) (IT)**

(74) Representative: **Minoja, Fabrizio**
**Bianchetti Bracco Minoja S.r.l.**
**Via Plinio, 63**
**20129 Milano (IT)**

(56) References cited:
WO-A1-2009/126992    US-A- 5 498 429
US-A1- 2005 260 317    US-A1- 2005 260 329
US-A1- 2006 198 930    US-A1- 2007 148 285

• **DATABASE GNPD [Online] Mintel; March 2010 (2010-03), Anonymous: "Luxurious Fruit (Peach)", XP002617340, retrieved from www.gnpd.com Database accession no. 1293598**
• **RIEDEL H R: "'Single shot' filled jelly fruits", CONFECTIONERY PRODUCTION, vol. 56, September 1990 (1990-09), pages 686-687, XP009143432,**

## Description

## Technical field of the invention

The present invention relates to a process for the preparation of gumdrops with a fluid filling wherein the filling remains inside a gelatinous shell.

## Background of the invention

Gumdrops (called "jellies" or "jelly candies" in technical jargon) are known. They are characterised by the presence of one or more hydrocolloids which give the gumdrop a texture. This type of product includes jellies with a filling, with aerated parts and with alternating configurations of strips of various colours, and textures which are described, for example in WO2006/020746.

Pectin-based gumdrops are known wherein both the external part and the filling are gelled, as described in US 6528102 and RU2199231. Fruit ingredients may be used in conjunction with other ingredients to yield jelly candies with a soft filling (Luxurious Candies Mintel record 1293598).

Filled gumdrops comprising an additional layer acting as a cap and a backing layer are also known, as described in WO2009/126992. Said cap produces visual effects and contains the filling more effectively, but involves an additional step in the manufacturing process.

Traditionally, gumdrops are based on sugar; however, sugar-free gumdrops, with or without a filling, are also known, as taught by WO2008/100853 and WO2006/096412.

The method used to obtain filled gumdrops is deposition. The apparatuses traditionally used, known to the skilled person as mogul plants (NID, Winkler, Makatt), simultaneously deposit the outer and inner parts ("one-shot" technology), which take the form of viscous liquids at the time of deposition.

Deposition is usually performed in starch moulds, and the shell (and optionally the filling) gels as a result of the temperature reduction and loss of humidity in chambers with an airflow having a controlled temperature and humidity. Other conventional techniques are described in Sugar Confectionery Manufacture, 2nd edition - 1999, pp. 189-217, E.B. Jackson ed., Aspen Publishers, Inc. Gaithersburg, Maryland (1999).

A technical problem which arises in the manufacture of filled gumdrops is commonly defined as the off-centring of the filling (i.e. when the filling is off-centred). Both the shell and the filling are highly fluid at the time of deposition, with the result that the filling can easily move. In particular, differences of density between shell and filling cause the filling to move upwards or downwards. In the case of fillings without thickeners, namely fillings that remain liquid, said problem is magnified by the difference in formulation between the gelatinous shell and the filling.

The movement of the filling from the centre toward one of the surfaces makes the gumdrops fragile, so that they are unlikely to reach the consumer in an acceptable condition, because the liquid filling easily leaks.

In the event the filling shows up on the surface, problems also arise during the normal manufacturing stages, because the liquid soils the mould material and production lines.

A traditional solution is to manufacture a filled jelly in which the filling is not liquid, but a soft material. In this way a variety of ingredients like fondants (which are solid at room temperature), caramel, fudges, truffle, nougatine, krokant can be used as a filling for deposited jellies, provided that the filling has "a similar degree of firmness to the jelly itself at the end of the cooling process" like thought by H.R. Riedel (Single shot filled jelly fruits (H.R. Riedel - Confectionery production, vol. 56, Sep. 1990, pp686-687). To serve this purpose the man skilled in the art may add a gelling agent to the centre fill to increase its viscosity. US 2006-0198380 teaches to add to the filling xantan gum, pectin, agar-agar, carageenan and mixtures thereof.

A different possible solution to this problem is to deposit the filling at a lower temperature than the shell, to aid gelling. Said solution is described in WO2006/049947 (corresponding to US 2005/260329), wherein shell and filling, which have different densities, are deposited by the one-shot technique at different temperatures.

Other possibilities involve the use of special apparatuses, like those claimed in US 2005/0260317 to control the thickness of the exterior wall of various centre fill confectionery, comprised centre filled jellies.

The problems of off-centre fluid filling still persist in the state of the art even if the teachings described in the preceding documents are followed. In particular, said problems persist even if the shell and filling are deposited at different temperatures, and even if the density of the shell and filling are similar, contrary to the behaviour described in WO2006/049947.

There is consequently still a need to provide economical methods of manufacturing gumdrops with a fluid filling wherein the filling does not leak during the manufacturing process or before consumption. Particularly there is the need to provide methods of manufacturing gumdrops with a fluid filling, and formulation thereof, wherein the problem of off-centring is greatly reduced or eliminated and, consequently, the produced jellies show reduced problem of centre leaking during manufacture and storage.

**EP 2 600 734 B1**

## Summary of the invention

The Applicant has found a a method of obtaining a formulation for gumdrops with a fluid filling wherein the problem of off-centre filling is advantageously solved.

The invention relates to a method according to the claims. Surprisingly, in said formulation the problems of off-centre filling and leakage are further reduced when the filling is greater than 7%, and even more preferably, when the filling is greater than 10% by weight of the total gumdrop; this contrasts with what is generally believed by persons skilled in the field, namely that increasing the percentage filling increases leakage because the walls of the shell become thinner.

The Applicant has also found that an even more advantageous filling configuration is obtained when the filling occupies a space bounded by:

- a height h lying along the vertical deposition axis;
- a segment orthogonal to the height called $l_{max}$ (maximum length) which identifies the maximum extent of the filling in the direction orthogonal to the deposition axis;

wherein the equation $h<l_{max}$ is fulfilled.

The method of obtaining the gumdrop comprises the following stages:

a) Providing a fluid composition for the shell containing sugars or sugar substitutes, acid, gelatin and pectin. Said composition has an acid pH and is produced by known methods and used at a suitable temperature to ensure its fluidity. Said composition will give rise to the shell of the gumdrop.
b) Providing a different fluid composition for the filling, containing at least one acid. Said composition also has an acid pH, which must be less than that of the composition described in paragraph a), and is manufactured according to known methods and used at a suitable temperature. Said composition will give rise to the filling.
c) Depositing compositions a) and b) in moulds to generate a gumdrop comprising a shell and a filling;
d) Leaving the shell to gel;
e) Demoulding the gumdrops;
f) Packaging the gumdrops.

The pH of composition a) is between 3.0 and 3.5, and the pH of composition b) is between 2.2 and 2.8.

The densities of the shell and filling are very similar; the difference between the two is preferably less than 2.5% by weight of the shell density.

The Applicant postulates that, immediately after the deposition of the gumdrop, as the fluid masses of the shell and filling are in contact with one another, the hydrogen-ion concentration gradient tends to balance out by means of a flow of acid from filling to shell. The lower the pH, the faster the pectin gels, and it begins to thicken in the part of the shell around the filling before it does so in other areas, thus limiting the mobility of the filling.

A formulation and process like those described also includes a pectin gradient; in theory said gradient would also tend towards equilibrium, which would also lead to thickening or gelling of the filling. However, the Applicant has found that the filling of the gumdrop remains fluid, probably because food acids are more mobile than a fibre like pectin, which gels rapidly around the filling before it has time to spread through the filling.

## Detailed description of the invention

The present invention consists of a process for preparing a gumdrop deposited with a fluid filling.

Gumdrops are candies with a soft bite texture characterised by the presence of at least one thickener or gelling agent. Said gelling agent is a hydrocolloid which has the purpose of giving texture to the gumdrop, and binding the residual water therein.

In the filled gumdrop, the fundamental gelling agent which must be present in the shell is pectin in combination with gelatin.

The shell must also contain at least one sugar or a substitute and an acid.

The filling must remain fluid and must include an acid.

For the scope of the present application the term fluid, when referred to the filling, refers to a substance that is free flowing during and after manufacture. In particular it is required the absence, or the unintentional presence in traces, of thickeners and gelling agents like those used in the external of jelly shell. In the filling of the present application, which is to remain fluid, no gelling agents are added on purpose. Example of such gelling agents are: pectin, gelatine, starch, modified starch, xanthan gum, gellan, agar agar, carrageenans, konjac, alginates, guar gum, locust-bean gum, gum arabic, tara gum, cellulose, modified cellulose and mixtures thereof. Filling based on fondant have no gelling agents, but, nonetheless they are not fluid at room temperature. Fondants are mixtures of viscous syrups, like glucose syrup, very finely crystallized sugars (or sugar replacers), with very little water activity and although they may be pumpable at temperatures higher than 50°C, they are solid and retain their shape at room temperature (20-25°C). The same applies to toffees and fudge, both of which have sugar crystals, a typical chewy an melt-in-the mouth texture, but an indubitably solid appearance.

For the purpose of the present application we may define a fluid filling like a filling devoid of gelling agents and sugar crystals. A fluid filling has, anyway, a degree of viscosity determined by its formulation.

Consumers will appreciate the difference of texture between the fluid filling, which squeezes out of the confection when bitten into and the external jelly shell.

The term fluid also indicates a composition which maintains a certain flowability at manufacturing temperatures, and can be deposited with the conventional apparatuses. The filling of the product produced by the present invention remains fluid also after manufacture, whilst the external jelly shell does not.

In the filled gumdrop, the pH of the filling is lower than that of the shell.

The Applicant has found that said gumdrop presents fewer problems of movement of the filling downward or upward from the original position of the centre filling than gumdrops made according to the prior art.

The acids present are those generally used in candy production, preferably chosen from adipic, citric, fumaric, lactic, malic, oxalic, succinic and tartaric acid and mixtures thereof.

The acids can be purchased in solid form and dissolved in the manufacturing phases. Various degrees of hydration are available, such as citric acid monohydrate and anhydrous citric acid.

Various particle sizes are also available, such as tartaric acid type 1 (0-200 $\mu$), Caremoli, and tartaric acid S205/06, ICV (<63 $\mu$).

Alternatively, the acids can be used in the form of concentrated solutions.

In a preferred embodiment of the present invention, the acids included in the filling can be wholly or partly carried by more complex ingredients such as, preferably, plant extracts, foods with colouring properties (colouring foodstuffs), fruit concentrates, purees, fruit juices and mixtures thereof.

Optionally, the acids included in the shell can also be wholly or partly carried by more complex ingredients such as those already mentioned.

The acids can also be present in buffered form in order to control the pH. Commonly used buffers are citric/citrate and lactic/lactate, alone or mixed.

Regardless of their nature, properties or state or the presence of buffers, the presence of acids must give the filling a lower pH than that of the gelatinous shell.

Traditionally, the pH is measured in solution by electrodes immersed therein. However, electrodes which measure the pH of semisolid food compositions (meat, cheese, jellies, fruit) are available, and can be used to measure the gelatinous shell and filling of the gumdrops produced according to the invention. Said electrodes are marketed, for example, by Testo under model no. 206-pH2 and by Termo Fisher with the tradenames "pHSpear" and "pH Spear Tip Electrode".

In a preferred embodiment of the invention, the pH of the shell is not homogenous at every point; in particular, the pH is characterised by a gradient which increases in proportion to the distance from the filling. It is postulated that this pH gradient is due to migration of part of the acid to the shell area adjacent to the filling.

In a further preferred embodiment, the gel of the shell becomes less firm as the distance from the filling increases.

The hydrocolloid characterising the shell of the gumdrop is pectin. Pectin is a hydrocolloid which has the special characteristic of causing gelling only in the presence of acids and sugars (or substitutes).

Pectin is generally derived from citrus fruit peel or apple purée by a process of extraction and purification. An alternative source is sugar beet.

Pectin is a polysaccharide with linear regions of polygalacturonic acid (homo-galactouronan) and branched regions with rhamnose, galactose and arabinose. Galacturonic acid is naturally partly esterified with methanol.

The grades traditionally available refer to the quantity of esterified acid, and are identified in the industry as high-methoxyl, low-methoxyl and amidated pectins. When the degree of esterification (DE) is greater than 50% (half of the lateral carboxyl groups esterified), pectins are described as high-methoxyl (or high methyl ester or HM) pectins. The other pectin grades are derived by hydrolysis and separation and optional insertion of amide groups.

High-methoxyl pectin is used in a preferred embodiment of the invention. Pectin with DE>60% is further preferred, and pectin with DE>70% is even more preferred.

In another preferred embodiment, the pectin used in the shell of the gumdrop is quick-setting pectin.

In a preferred embodiment, the pectin concentration in the shell is 0.2% to 5%, preferably 0.5% to 3%.

In a preferred embodiment, the shell comprises over 50% by weight of sugars, carbohydrates or substitutes.

The filling is totally surrounded by shell to prevent leakage.

The Applicant has surprisingly found that flattened filling are preferred in conjunction with the mentioned difference of pH and formula and help to keep off centring to a minimum, in contrast to traditional drop-like fillings like illustrated in US2005-0260317 or spheroidal ones like those illustrated in US2006/0198930. Without being bound by theory it is believed that a flattened filling increases the advantage of the differences in pH between the filling and the exterior because, keeping constant the filling percentage, the surface of the filling in contact with the exterior is higher than that with a spherical-like shape. Flattened filling depart from an ideal sphere and are more similar to ellipsoid or even to biconcave solids (dumbbell cross section).

In particular a preferred flattened filling is described as a region of space occupied by the filling and bounded by:

- a height h lying along the vertical deposition axis;
- a segment orthogonal to the height called $l_{max}$ (maximum length) which identifies the maximum extent of the filling in the direction orthogonal to the deposition axis.

h must be less than $l_{max}$; even more preferably, h is between ½ and 1/10th of $l_{max}$.

Moreover, contrary to what was previously believed, namely that smaller percentages of filling are more easily contained by the shell, the Applicant has found that in gumdrops wherein the filling amounts to at least 7% by weight of the total gumdrop, and even more preferably at least 10%, the filling is better contained by the shell, namely with fewer problems like leaking or gumdrop becoming fragile derived from movement of the filling downward or upward from the original position of the centre filling.

The Applicant has found that other hydrocolloids can advantageously be used in the shell in addition to pectin and gelatin. In fact, pectin has organoleptic characteristics during chewing, such as a firm, short texture, which can be usefully modified by the presence of other hydrocolloids to give, for example, more gumminess during chewing and different rheologies during the manufacturing stages as well as modified setting properties which can help in carrying out the invention and controlling the off-centring.

Hydrocolloids which can be used in addition to pectin and gelatin are starch, modified starch, xanthan gum, gellan, agar agar, carrageenans, konjac, alginates, guar gum, locust-bean gum, gum arabic, tara gum, cellulose, modified cellulose and mixtures thereof.

Gelatin is a protein of animal origin (pork, beef, fish, or chicken) which forms a gel regardless of its pH. Commercially, the strength of the gel obtained from gelatin is defined by its bloom grade. Standardised tests which use particular penetrometers (US1540979) are available to measure bloom strength (BSI 757). Gelatins with a strength of 80 to 280 bloom are commercially available.

The gelatins preferred in the present invention have a strength greater than 200 bloom, and preferably greater than 250 bloom.

In a preferred embodiment, the gelatin concentration in the shell is 1% to 10%, preferably 3% to 7%.

In a preferred embodiment, gelatins with an isoelectric point greater than 7 are used.

In a preferred embodiment, the shell of the filled gumdrop contains a mixture of pectin, gelatin and starch.

The term "starch" comprises a large category of polysaccharides consisting of linear (amylose) and branched (amylopectin) glucose chains. Starches can be obtained from a variety of plant sources, including maize, waxy maize, tapioca, potatoes, rice and corn. Moreover, native starches can be modified to obtain the desired properties. Modified starches included physically modified starches, enzymatically modified starches, dextrins, starches treated with acids or alkalis, bleached or oxidised starches, mono- and di-starch phosphates, acetylated starch, phosphated distarch-phosphates, acetylated distarch-phosphates, acetylated distarch-adipates, hydroxypropyl starches, hydroxypropyl distarch-phosphate, sodium starch octenyl succinate, and acetylated oxydised starch.

A series of native starches called "functional" starches recently became available, which naturally reproduce some functions of modified starches.

The preferred starches are selected from the group comprising native starch, acetylated starch and sodium starch octenyl succinate.

In a preferred embodiment, the starch concentration in the shell is 1% to 10%, preferably 2% to 6%.

In an embodiment, the shell contains pectin, gelatin and modified starch. Preferred types are: pectin with DE>60, gelatin higher than 200 bloom and modified starch chosen from acetylated starch and sodium starch octenyl succinate. Preferred ranges are: pectin 0.5%-3%, gelatin: 3%-7% and modified starch 2%-6%.

Ingredients commonly employed in the confectionery industry, such as sugars, polyols, glycerin, sweeteners, glucose syrups, maltitol syrup, flavourings, colourings, fruit derivatives, vegetable derivatives and mixtures thereof can be used in both the shell and the filling.

The preferred sugars are saccharose, fructose and glucose, and mixtures thereof. All grades of glucose syrup can be used, with either low or high DE (dextrose equivalent), those with a high fructose content (high-fructose corn syrup), and mixtures thereof.

Sugar, and optionally glucose syrup, can be wholly or partly replaced by other sweeteners to obtain products with a low sugar content or sugar-free products. Among the various sugar substitutes, polyols and maltitol syrups are preferred. Polyols are obtained by reduction of the corresponding sugars. The polyols preferred in the present invention are maltitol, sorbitol, xylitol, mannitol, erythritol, isomalt, and mixtures thereof. Maltitol and xylitol and mixtures thereof are particularly preferred. All grades of maltitol syrup can be used for the present invention; the preferred grades are Lycasin® 80/55 and Lycasin HBC®, (Roquette) and C Maltidex 16311 (Cerestar).

Intensive sweeteners such as sucralose, acesulfame K, aspartame-acesulfame salts, alitame, aspartame, neotame, saccharine, neohesperidine, thaumatin, monellin, stevioside, rebaudioside and perillartine are preferred.

Flavourings are substances which interact with a series of receptors in the nose and mouth of the consumer, causing a series of organoleptic reactions which characterise the foodstuff containing them with particular perfumes, flavours and sensations (including fresh, pungent and other sensations). Flavourings may consist of aromatic preparations (including essential oils), natural flavouring substances and artificial flavouring substances, flavourings deriving from heat treatments, flavouring substances deriving from the smoking process, and mixtures thereof.

In a particularly preferred embodiment, the flavourings used are fruit flavourings. These flavourings can be constituted by natural flavouring substances derived or not derived from the fruit associated with the final flavouring, artificial flavouring substances, aromatic preparations (including fruit juices and essential oils of fruit, flowers, berries, oleoresins, exudates, etc.) mixed together and optionally solubilised in appropriate solvents.

Optionally, mint flavourings can be used. They can include essential oils of mint and natural or artificial flavouring agents (such as natural or artificial vanillin), and substances with cooling properties of natural origin (such as menthol) or artificial origin (such as N((5-methyl-2-isopropyl)cyclohexylcarbonyl)-glycine ethyl ester) can optionally be added.

All the available food-grade colourings can be used, preferably those of natural origin, such as turmeric and cochineal.

Fruit or vegetable derivatives, optionally mixed together, are used in one of the preferred embodiments of the invention. The preferred fruit derivatives are juices, and concentrated juices are particularly preferred. The preferred vegetable derivatives are those with a secondary colouring function (colouring foodstuffs), such as spinach or elderflower extract.

In a further particularly preferred embodiment, sugars, glucose syrups, natural flavourings, natural colourings, fruit derivatives and vegetable derivatives are used simultaneously.

Plays of flavour (such as a mint filling and a vanilla shell) and colour (green filling and transparent shell) can be obtained with routine experiments.

The process of obtaining the gumdrops comprises at least the following stages:

a) Providing a fluid composition for the shell, comprising sugars or sugar substitutes, acid, gelatin and pectin;
b) Providing a fluid composition for the filling, comprising at least one acid;
c) Depositing compositions a) and b) in moulds to generate a gumdrop comprising a shell and a filling;
d) Leaving the shell to gel;
e) Demoulding the gumdrops;
f) Packaging the gumdrops, characterised in that composition a) is subject to an increase in viscosity, due to its constituents, after step c), in which the viscosity increases to values higher than 50000 mPa*s (50000 cPs) at 85°C in 4 minutes.

Said process can be advantageously performed with the apparatuses traditionally used in the gumdrop manufacturing field.

In paragraph a) and b) the term "fluid" also indicates a composition which maintains a certain flowability at manufacturing temperatures, and can be deposited with the conventional apparatuses. The filling of the product produced by the present invention remains fluid also after manufacture, whilst the external jelly shell does not.

In terms of viscosity, measured in centipoise, a composition characterised by a viscosity of less than 30000 mPa*s (30000 cPs) at 85°C, and preferably less than 20000 mPa*s (20000 cPs) at 85°C, is preferred for stage a).

In a preferred embodiment a composition characterized by a viscosity of lower than 30000 and higher than 5000 mPa*s (cPs) at 85°C, and preferably lower than 20000 and higher than 10000 mPa*s (cPs) at 85°C, is preferred for stage a).

In an embodiment the composition provided at stage b) retains its fluid properties also at room temperature and its viscosity is less than 15000 mPa*s (15000 cPs) at 25°C, and preferably less than 10000 mPa*s (10000 cPs) at 25°C.

In a different embodiment the composition provided at stage b) is characterized by a viscosity of lower than 15000 and higher than 1000 mPa*s (cPs) at 25°C, and preferably lower than 12000 and higher than 5000 mPa*s (5000 cPs) at 25°C.

In a preferred embodiment, the phase c) is operated by two pistons which can be defined as:

$P_a$: a piston depositing the composition a) which originates the external shell
$P_b$: a piston depositing the composition b) which originates the filling.

Operating with the one shot apparatuses the two pistons must compete a cycle in the same time span to deposit one jelly with shell and filling at the same time. The applicant has found that to obtain the preferred flattened filling configuration the piston $P_b$ is preferably delayed by 0.2 to 0.7 seconds compared to the first one. The applicant has also found that better results are reached if $P_b$ is operated at a higher speed of deposition compared to $P_a$. to complete the deposition of composition b) before deposition of composition a). In a preferred embodiment the speed of $P_b$ is higher than 1,2 times the speed of $P_a$, still more preferably higher than 1.8 times and even higher than 2 times the speed of $P_a$.

In a preferred embodiment of the invention, the temperatures of compositions a) and b) are the same at the time of deposition, preferably exceeding 70°C.

In an alternative embodiment of the invention, composition a) is deposited at a higher temperature than composition b).

In a preferred embodiment of the invention, the density of compositions a) and b) is kept as similar as possible. This can be achieved by density monitoring during the process and standardisation of said process. In particular, a process wherein the difference between the density of composition a) and the density of composition b) is less than $\pm$ 2.5% of the density of composition a) is preferred,

as expressed by the following equation:

wherein:

    d = density (g/ml)
    a = composition a)
    b = composition b)

$$[(d_a\text{-}d_b)/d_a] \cdot 100 < \pm\, 2.5\%$$

In another preferred embodiment of the invention, the concentration of solids in the two compositions destined to form the shell and filling of the gumdrop (composition a) and composition b)) is maintained as similar as possible before deposition.

In particular, the difference between the concentration of solids in composition a) and the concentration of solids in composition b), divided by the concentration of solids in composition a), is less than $\pm 4\%$, preferably less than $\pm 2\%$, and even more preferably less than $\pm 1\%$.

The concentration of solids can be measured by means of the loss on drying, or by measuring the Brix grade (°Bx) with refractometers or reflexometers. If necessary, corrective factors can be applied to the measurement in Brix degrees, according to the solutes used in the compositions.

Said property can be expressed by the following equation:

wherein:

    ds = concentration of solids (%)
    a = composition a)
    b = composition b)

$$[(ds_a\text{-}ds_b)/ds_a] \cdot 100 < \pm\, 4\%$$

The Applicant has found that the off-centre filling problem is further reduced by the use of shell compositions which possess the property of thickening rapidly after deposition. The shell composition (a) is, after deposition of stage c), characterised by an increase in viscosity such that the viscosity reaches values of over 50000 mPa*s (50000 cPs) at 85°C in 4 minutes and preferably over 60000 mPa*s (60000 cPs) at 85°C in 4 minutes.

The Applicant has found that the hydrocolloid composition of the shell, as described in the preceding paragraphs, can meet the preferred viscosity increase parameters.

A process that uses cold starch moulds at stage c) is also preferred. In particular, a process wherein the starch of the moulds at stage c) presents a temperature of less than 25°C and humidity of less than 8% is preferred.

The gelling and curing described in stage d) also takes place in said moulds, preferably in suitable chambers with controlled temperature and humidity.

The gelling process of the shell terminates in the cold drying chambers, where it loses part of its moisture, which is expressed as an increase in the percentage of solids. The filling also loses part of its moisture. The temperature and relative humidity of the climatic chamber and the residence times are regulated to give the desired losses of moisture. According to a preferred embodiment of the invention, during stage d) the percentage of solids in the filling increases by a maximum of 6%, and the percentage of solids in the shell increases by a maximum of 10%.

When gelling and curing is finished, the gumdrops are demoulded, and preferably blown and polished. Polishing is performed with polishing agents traditionally used in confectionery, including carnauba wax, beeswax, oils, shellac and mixtures thereof.

**Example 1 (inventive) - Filled gumdrop with a sugar base: manufacturing process and composition**

A pre-mix of water, sugar and glucose is prepared, and cooked to obtain the desired concentration of solids; the other ingredients are then added to said pre-mix to form the filling composition illustrated in table 1.

**Table 1: filling composition**

| Ingredients | % |
| --- | --- |
| Water | 14 |
| Glucose syrup (85% solids) | 60 |
| Sugar | 20 |
| Citric acid monohydrate | 5 |
| Natural flavourings - lemon flavour | 0.5 |
| Colouring foodstuff - yellow shade (65% solids) | 0.5 |
| **Total** | **100.00** |

The total solids in the composition amount to 75.6%.
A pre-mix of water, sugar and glucose is prepared, and cooked to obtain the desired concentration of solids; further ingredients are then added to said pre-mix to form the shell composition illustrated in table 2.

**Table 2: shell composition**

| Ingredients | % |
| --- | --- |
| Water | 18 |
| High methoxyl pectin | 2 |
| 200 bloom gelatin | 6 |
| Glucose syrup 45DE (85% solids) | 44 |
| Sugar | 27 |
| Citric acid | 2 |
| Natural flavourings - lemon flavour | 0.5 |
| Colouring foodstuff - yellow shade (65% solids) | 0.5 |
| **Total** | **100** |

The total solids in the composition amount to 74.4%.
The pH of the filling composition is lower than the pH of the shell composition.
The difference between the percentage of solids in the filling and the shell amounts to 1.6% of the solids in the shell.
The two compositions are deposited at 85°C in a NID Mogul plant to form filled gumdrops weighing 5 g with 10% filling.
The moulds are starch moulds, with starch at 24°C and 7% humidity.
Immediately after deposition, the gumdrops, still in the moulds, are introduced into chambers with controlled humidity and temperature (30% R.H., 22°C, 48h).
During curing the shell loses 5% of its moisture, and the filling 3%.
After curing the gumdrops are demoulded, blown and polished with beeswax and oil (medium-chain triglycerides).
The final composition of the shell and the filling is shown in the tables below:

### Table 3: final filling composition

| Ingredients | % |
|---|---|
| Total water | 20.6 |
| Glucose syrup (anhydrous) | 53 |
| Sugar | 20.8 |
| Citric acid (anhydrous) | 4.8 |
| Natural flavourings - lemon flavour | 0.5 |
| Colouring foodstuff - green shade - (anhydrous) | 0.3 |
| **Total** | **100.00** |

### Table 4: final shell composition

| Ingredients | % |
|---|---|
| Total water | 19.8 |
| High methoxyl pectin | 2.1 |
| 200 bloom gelatin | 6.4 |
| Glucose syrup 45DE (anhydrous) | 40 |
| Sugar | 28.8 |
| Citric acid | 2.1 |
| Natural flavourings - lemon flavour | 0.5 |
| Colouring foodstuff - yellow shade - (anhydrous) | 0.3 |
| **Total** | **100** |

The filling is wholly contained inside the shell. The pH of the filling is less than that of the shell. Quality check after manufacture highlights a good quality product with very little off centring.

**Example 2 (inventive) - Sugar-free filled gumdrop: composition**

By applying a process similar to the preceding one, the following sugar-free gumdrop is obtained.

### Table 5: final composition of sugar-free filled gumdrop

| Ingredients | % |
|---|---|
| Total water | 21.3 |
| Sorbitol (anhydrous) | 20.7 |
| Glycerin | 4 |
| Xylitol | 48.2 |
| Malic acid | 4.8 |
| Natural flavourings (strawberry flavour) | 0.5 |
| Colouring foodstuff - red shade - (anhydrous) | 0.5 |
| **Total** | **100.00** |

**Table 6: final composition of sugar-free shell**

| Ingredients | % |
|---|---|
| Total water | 18.1 |
| High methoxyl pectin | 1.5 |
| 200 bloom gelatin | 7.2 |
| C Maltidex 16311 (anhydrous) maltitol syrup | 53.0 |
| Xylitol | 17.8 |
| Malic acid | 1.8 |
| Natural flavourings (banana flavour) | 0.6 |
| **Total** | **100** |

The filling is wholly contained inside the shell, and has a different flavouring and colour. The pH of the filling is less than that of the shell. Quality check after manufacture highlights a good quality product with very little off centring.

**Example 3 - Comparison of different formulations according to the invention and a reference example**

Different fluid filled jelly were manufactured with the apparatuses and methods outlined in the previous examples. The following final formulations were obtained (all listed ingredients are intended as anhydrous except water and where specified)

| Filling Ingredients (%) | 3a (invention example) | 3b (invention example) | 3c (reference example) |
|---|---|---|---|
| Total water | q.s. to 100%(≈21%) | q.s. to 100%(≈21%) | q.s. to 100%(≈21%) |
| Glucose syrup | 49.5 | 49.5 | 49.5 |
| Sugar | 26 | 26 | 27 |
| Citric acid | q.s. to pH 2.5 (2% - 3%) | q.s. to pH 2.5 (2% - 3%) | q.s. to pH 3.1 (1% - 2%) |
| Natural flavourings - lime flavour | 0.2 | 0.2 | 0.2 |
| Colouring foodstuff - green shade - | 0.3 | 0.3 | 0.3 |
| **Total** | **100.00** | **100.00** | **100.00** |
| **Shell Ingredients (%)** | | | |
| Total water | 19 | 19 | 19 |
| High methoxyl pectin | 1 | 1 | 1 |
| gelatin (250 bloom) | 5 | 5 | 5 |
| Modified Starch | 4 | | |
| Glucose syrup | 40 | 42 | 42 |
| Sugar | 28.5 | 30.5 | 30.5 |
| Citric acid | 2 | 2 | 2 |
| Natural flavourings - orange flavour | 0.3 | 0.3 | 0.3 |
| Colouring foodstuff - yellow shade - | 0.2 | 0.2 | 0.2 |
| **Total** | **100.00** | **100.00** | **100.00** |

(continued)

| Filling Ingredients (%) | 3a (invention example) | 3b (invention example) | 3c (reference example) |
|---|---|---|---|
| pH filling | 2.5 ± 0.2 | 2.5 ± 0.2 | 3.1 ± 0.2 |
| pH shell | 3.1 ± 0.2 | 3.1 ± 0.2 | 3.1 ± 0.2 |
| Quality evaluation | Good. Better centering and fewer filling dripping than example 3b | Acceptable - fair. Still some filling dripping out after ageing. | Poor, with filling losses. Not acceptable |

**Claims**

1. A process for the manufacture of deposited candies comprising :

 - a fluid filling comprising an acid;
 - an external jelly shell, completely surrounding the fluid filling, comprising pectin and gelatin, sugars or sugar substitutes, and at least one acid wherein the pH of the shell is between 3 and 3.5, and the pH of the fluid filling is between 2.2 and 2.8.

 said process comprising the following steps:

 a) Providing a fluid composition for the shell, comprising sugars or sugar substitutes, acid, gelatin and pectin;
 b) Providing a fluid composition for the filling, comprising at least one acid and **characterised by** a viscosity lower than 15000 mPa*s (15000 cPs) at 85°C;
 c) Depositing compositions a) and b) in moulds to yield candies comprising a shell and a filling;
 d) Leaving the shell to set;
 e) Demoulding the candies;
 f) Packaging the candies;

 **characterised in that** composition a) is subject to an increase in viscosity, due to its constituents, after step c), in which the viscosity increases to values higher than 50000 mPa*s (50000 cPs) at 85°C in 4 minutes.

2. Process as claimed in claim 1, wherein the difference between the densities of compositions a) and b) is less than ± 2.5%.

3. Process as claimed in any one of claims 1 or 2 , wherein the difference between the concentration of solids in composition a) and the concentration of solids in composition b), divided by the concentration of solids in composition a), is lower than ± 4%.

4. Process as claimed in claim 1, wherein the moulds used in step c) are starch moulds **characterised by** starch at a temperature lower than 25°C and a water content lower than 8%.

5. Process as claimed in claim 1, wherein step d) is performed in chambers with controlled air temperature and relative humidity.

6. Process as claimed in claim 1, wherein during step d) the concentration of solids in the filling increases by a maximum of 6%, and the concentration of solids in the shell increases by a maximum of 10%.

7. Process as claimed in claim 1, wherein after step e) and before step f) the following steps are introduced:

 g) blowing the candies,
 h) polishing the candies.

**Patentansprüche**

1. Verfahren für die Herstellung von gegossenen Bonbons, umfassend:

   - eine flüssige Füllung, die eine Säure umfasst;
   - eine äußere gelierte Hülle, die vollständig die flüssige Füllung umschließt, umfassend Pektin und Gelatine, Zucker oder Zuckeraustauschstoffe und mindestens eine Säure, wobei der pH-Wert der Hülle zwischen pH 3 und 3,5 liegt und der pH-Wert der flüssigen Füllung zwischen pH 2,2 und 2,8 liegt;

   wobei das Verfahren die folgenden Schritte umfasst:

   a) Bereitstellen einer flüssigen Zusammensetzung für die Hülle, umfassend Zucker oder Zuckeraustauschstoffe, Säure, Gelatine und Pektin;
   b) Bereitstellen einer flüssigen Zusammensetzung für die Füllung, umfassend mindestens eine Säure und **gekennzeichnet durch** eine Viskosität, die bei 85 °C niedriger als 15.000 mPa*s (15.000 cPs) ist;
   c) Einbringen der Zusammensetzungen a) und b) in Formen, um Bonbons zu erhalten, die eine Hülle und eine Füllung umfassen;
   d) Festwerdenlassen der Hülle;
   e) Entformen der Bonbons;
   f) Verpacken der Bonbons;

   **dadurch gekennzeichnet, dass** die Zusammensetzung a) aufgrund ihrer Bestandteile nach Schritt c) eine Zunahme in der Viskosität erfährt, wobei die Viskosität bei 85 °C in 4 Minuten auf Werte höher als 50.000 mPa*s (50.000 cPs) ansteigt.

2. Verfahren nach Anspruch 1, wobei der Unterschied zwischen den Dichten der Zusammensetzungen a) und b) kleiner als ± 2,5 % ist.

3. Verfahren nach einem der Ansprüche 1 oder 2, wobei der Unterschied zwischen der Konzentration an Feststoffen in Zusammensetzung a) und der Konzentration an Feststoffen in Zusammensetzung b), geteilt durch die Konzentration an Feststoffen in Zusammensetzung a) geringer als ±4 % ist.

4. Verfahren nach Anspruch 1, wobei die in Schritt c) verwendeten Formen Stärkeformen sind, die durch Stärke bei einer Temperatur von weniger als 25 °C und einen Wassergehalt von weniger als 8 % gekennzeichnet sind.

5. Verfahren nach Anspruch 1, wobei Schritt d) in Kammern mit gesteuerter Lufttemperatur und relativer Feuchte durchgeführt wird.

6. Verfahren nach Anspruch 1, wobei während Schritt d) die Konzentration an Feststoffen in Füllung um maximal 6 % ansteigt und die Konzentration an Feststoffen in der Hülle um maximal 10 % ansteigt.

7. Verfahren nach Anspruch 1, wobei nach Schritt e) und vor Schritt f) die folgenden Schritte eingeführt werden:

   g) Blasformen der Bonbons,
   h) Polieren der Bonbons.

**Revendications**

1. Procédé pour la fabrication de bonbons obtenus par dépôt, comprenant :

   - une garniture fluide, comprenant un acide ;
   - une enveloppe externe en gelée, entourant complètement la garniture fluide,

   comprenant de la pectine et de la gélatine, des sucres ou des succédanés de sucre et au moins un acide, le pH de l'enveloppe étant situé entre 3 et 3,5 et le pH de la garniture fluide étant situé entre 2,2 et 2,8, ledit procédé comprenant les étapes suivantes :

a) utiliser une composition fluide pour l'enveloppe, comprenant des sucres ou des succédanés de sucre, de l'acide, de la gélatine et de la pectine ;

b) utiliser une composition fluide pour la garniture, comprenant au moins un acide et **caractérisé par** une viscosité inférieure à 15.000 mPa.s (15.000 cPs) à 85°C ;

c) déposer les compositions a) et b) dans des moules pour obtenir des bonbons comprenant une enveloppe et une garniture ;

d) laisser durcir l'enveloppe ;

e) démouler les bonbons ;

f) emballer les bonbons ;

**caractérisé en ce que** la composition a) est soumise à une augmentation de la viscosité, due à ses constituants, après l'étape c), dans laquelle la viscosité augmente à des valeurs supérieures à 50.000 mPa.s (50.000 cPs) à 85°C en 4 minutes.

2. Procédé selon la revendication 1, la différence entre les densités des compositions a) et b) étant inférieure à ± 2,5%.

3. Procédé selon l'une quelconque des revendications 1 ou 2, la différence entre la concentration en solides dans la composition a) et la concentration en solides dans la composition b), divisée par la concentration en solides dans la composition a), étant inférieure à ± 4%.

4. Procédé selon la revendication 1, les moules utilisés dans l'étape c) étant des moules en amidon, **caractérisés par** de l'amidon à une température inférieure à 25°C et une teneur en eau inférieure à 8%.

5. Procédé selon la revendication 1, l'étape d) étant réalisée dans des chambres à température et à humidité relative de l'air contrôlées.

6. Procédé selon la revendication 1, la concentration en solides dans la garniture, pendant l'étape d), augmentant d'au maximum 6% et la concentration en solides dans l'enveloppe augmentant d'au maximum 10%.

7. Procédé selon la revendication 1, les étapes suivantes étant introduites après l'étape e) et avant l'étape f) :

g) souffler les bonbons ;

h) polir les bonbons.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006020746 A
- US 6528102 B
- RU 2199231
- WO 2009126992 A
- WO 2008100853 A
- WO 2006096412 A
- US 20060198380 A
- WO 2006049947 A
- US 2005260329 A
- US 20050260317 A
- US 20060198930 A
- US 1540979 A

**Non-patent literature cited in the description**

- Sugar Confectionery Manufacture. Aspen Publishers, Inc, 1999, 189-217
- **H.R. RIEDEL.** *Confectionery production,* September 1990, vol. 56, 686-687